# EUROPÄISCHE PATENTSCHRIFT

(11) **EP 0 363 837 B1**
(45) Veröffentlichungstag und Bekanntmachung des Hinweises auf die Patenterteilung: **20.01.1993**
(21) Anmeldenummer: 89118573.8
(22) Anmeldetag: 06.10.1989
(51) Int. Cl.: B64D 1/04

(54) **Fallschirmsystem für einen Abwurfkörper**
Parachute system for a launching body
Système de parachutage pour un corps de lancement

(30) Priorität: 08.10.1988 DE 3834309
(43) Veröffentlichungstag der Anmeldung: 18.04.1990
(73) Patentinhaber: DIEHL GMBH & CO., 90478 Nürnberg (DE)
(72) Erfinder: Thurner, Günther, Dr., D-8501 Schwaig (DE); Hammer, Helmut, D-8501 Heroldsberg (DE)

(56) Entgegenhaltungen:
- FR-A- 864 998
- FR-A- 2 590 664
- US-A- 4 333 400
- US-A- 4 753 171
- INTERNATIONALE WEHRREVUE no. 11, 1987, Seiten 1503 - 1510; B. SWEETMAN: "Die Weiterentwicklung des Artillerieraketensystems MARS/MLRS"

## Beschreibung

Die Erfindung betrifft ein Fallschirmsystem gemäß dem Oberbegriff des Anspruches 1.

Ein derartiges Fallschirmsystem ist aus der Darstellung rechts oben auf Seite 1506 in INTERNATIONALE WEHRREVUE Heft 11/1987 zur Gewährleistung der Funktions-Kinematik eines Abwurfkörpers in Form eines Submunitions-Gefechtskopfes bekannt. Es weist einen Bremsfallschirm auf, der die aus dem Träger ausgegebene Submunition relativ zur Trägergeschwindigkeit verzögert und in die vorgesehene Abstiegsorientierung überführt. Daraufhin wird vom Bremsschirm der eigentliche Abstiegsschirm dieses zweiteiligen Fallschirmsystemes aktiviert, indem der Abstiegsschirm aus seinem Stauraum herausgezogen und von seiner Packhülle befreit wird, so daß er sich in der Anströmung des absinkenden Abwurfkörpers entfalten kann. Zugleich wird die bisherige Ankopplung des Bremsschirmes gelöst, so daß die weitere Sturzbewegung des Abwurfkörpers nun vom Abstiegsschirm bestimmt wird. Um in dieser Abstiegsphase dem Abwurfkörper dann eine für bestimme Funktionen wünschenswerte oder gar erforderliche Drehbewegung um die Vertikale einzuprägen, kann der Abstiegsschirm als Rotationsfallschirm ausgebildet sein (vgl. EP 0 105 462 B). Der Abstiegsschirm kann aber auch lediglich als weiterer Bremsschirm ausgelegt sein, an dem der Abwurfkörper über ein Drehgelenk aufgehängt ist, wobei der Abwurfkörper selbst dann durch aktive oder passive Antriebseinrichtungen wie Tangentialdüsen oder Leitbleche (GB-PS 14 44 029) erforderlichenfalls in die funktionsbedingt gewünschte Rotation versetzt wird.

Aus der US-A-47 53 171 ist es bekannt, einen artilleristisch verbrachten Abwurfkörper eingangs erläuterter Art dadurch aus dem Trägergeschoß freizugeben, daß er unter Abscherung des Geschoß-Bodens nach rückwärts aus der Geschoßhülle herausgedrückt wird. Um die aufgrund der Drallstabilisierung des Geschosses klinitisch äußerst stabile Konfiguration aus schwerem Geschoßboden und axial unmittelbar davor aufsitzender Submunition zu trennen und dadurch den erwähnten Bremsschirm überhaupt erst zur Wirkung kommen lassen zu können, ist in jener Vorveröffentlichung vorgesehen, aus einem Hohlraum des Geschoß-Bodens heraus ein kragenförmiges Bremssegel radial aufzuspannen. Dadurch erfährt der Geschoß-Boden einen höheren aerodynamischen Widerstand, als die davor aufsitzende Submunition, so daß der Geschoß-Boden gegenüber der Submunition abgebremst und dadurch der Bremsfallschirm rückwärts aus der Submunition herausgezogen werden kann.

Nicht um einen Abwurfkörper mit Fallschirmsystem gattungsgemäßer Art handelt es sich dagegen bei dem Zünder-Bergesystem nach der US-A-4 333 400, wo vorgesehen ist, nach dem Ansprechen eines Geschosses auf ein Testziel die zu untersuchende Zündeinrichtung aus dem Geschoß freizugeben und dadurch zerstörungsfrei bergen zu können, daß zunächst ein Hilfsfallschirm geöffnet wird, der daraufhin den eigentlichen Bremsfallschirm durch Abziehen seiner Packhülse zur Funktion freigibt. Aus aerodynamischen Gründen verläuft die Flugbahn der Packhülse mit dem kleinen Hilfsschirm ganz anders als die Absinkbahn des zu bergenden Zünders mit seinem großen Bremsschirm, so daß eine Beschädigung des für die Inspektion zu bergenden Objektes durch die von seinem Bremsschirm abgezogene metallene Packhülse ausgeschlossen ist.

Diese Gefahr besteht aber bei einem zweiteiligen Fallschirmsystem gattungsgemäßer Art. Dort besteht nämlich die Gefahr, daß ein Koppelelement am Bremsschirm, insbesondere in der Bauform einer zur Freigabe des Abstiegsschirmes mittels des Bremsschirmes rückwärts aus der Submunition herausgezogenen Fallschirmkassette, in den sich gerade entfaltenden Abstiegsschirm einfällt und dessen Wirkung stört oder diesen sogar beschädigt.

In Erkenntnis dieser Gegebenheiten liegt der Erfindung die Aufgabe zugrunde, ein Fallschirmsystem gattungsgemäßer Art derart auszugestalten, daß eine Kollision des bereits abgetrennten Bremsschirmes und daran befestigter Konstruktionsteile mit dem sich gerade entfaltenden Abstiegsschirm vermieden wird, ohne für eine solche Kollisionsschutzmaßnahme konstruktiv oder hinsichtlich des Raumbedarfes aufwendiger zusätzlicher Maßnahmen zu bedürfen.

Diese Aufgabe ist erfindungsgemäß im wesentlichen dadurch gelöst, daß das Fallschirmsystem gattungsgemäßer Art gemäß dem Kennzeichnungsteil des Anspruches 1 ausgelegt ist.

Nach dieser Lösung wird der Packsack für den Abstiegsschirm als Träger eines zusätzlichen aerodynamischen Bremsmittels für den Bremsschirm und die daran befestigte Pack-Kassette benutzt, das seine Bremswirkung erst dann und dadurch entfaltet, daß der Abstiegsschirm im Zuge des Trennens des Fallschirmsystemes aus dem Packsack herausgezogen ist und dieser entgegen der ursprünglichen Orientierung umschlägt. Dadurch können sich auf seiner Außenmantelfläche angeordnete und an ihren freien Rändern mittels Fesselleinen gehalterte Stoffstreifen ausstellen und als zusätzliche Bremsflächen für die vom Bremsschirm getragene Kassette dienen, um deren Abstiegsgeschwindigkeit weiter zu verzögern und deren Abstiegsbahn aus der ursprünglichen Bahn auszulenken, so daß keine Kollisionsgefahr mit dem unterdessen aufgespannten Abstiegsschirm mehr besteht.

Zusätzliche Alternativen und Weiterbildungen sowie weitere Merkmale und Vorteile der Erfindung ergeben sich aus den weiteren Ansprüchen und, auch unter Berücksichtigung der Darlegungen in der Zusammenfassung, aus nachstehender Beschreibung eines in der Zeichnung unter Beschränkung auf das Wesentliche stark abstrahiert skizzierten bevorzugten Realisierungsbeispiels zur erfindungsgemäßen Lösung.

### Es zeigt:

Fig. 1 das Fallschirmsystem unmittelbar vor dem Abziehen des Packschlauches für den Abstiegsschirm,
Fig. 2 in detaillierterer Ausschnitt-Darstellung aus Fig. 1 den Packschlauch in Seitenansicht,
Fig. 3 das Fallschirmsystem gemäß Fig. 1 nach Abziehen des Packschlauches und Öffnen des Abstiegsschirmes,
Fig. 4 in detaillierterer Ausschnitt-Darstellung aus Fig. 3 den aufgrund der Anströmgegebenheiten umgeschlagenen Packschlauch mit nun ausgestellten Bremsmitteln
   **und**
Fig. 5 die ausgestellten Bremsmittel gemäß Fig. 4 in Draufsicht.

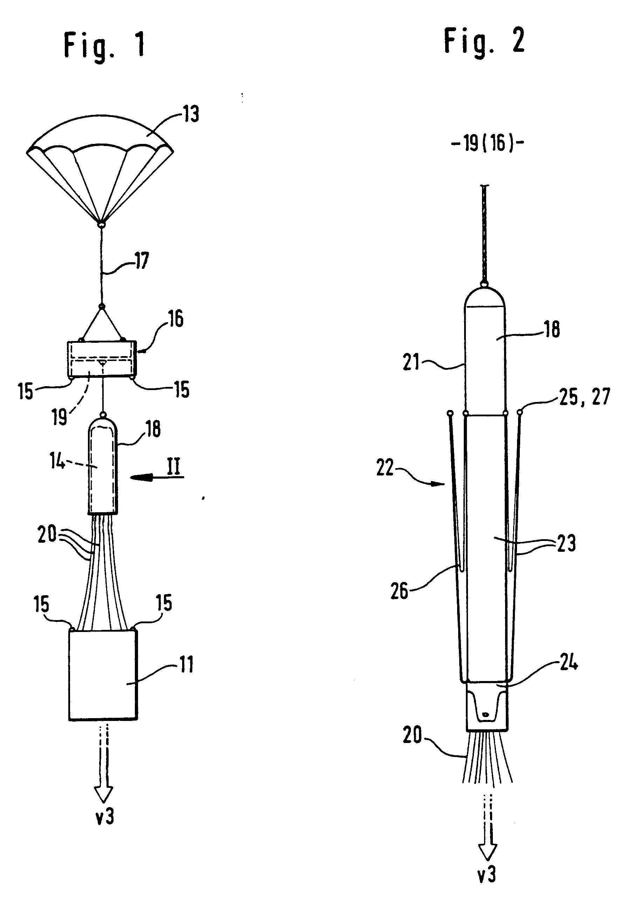

Ein mittels eines Trägers (in der Zeichnung nicht berücksichtigt) verbrachter Abwurfkörper wie insbesondere ein Submunitions-Gefechtskopf 11 verfügt über ein Fallschirmsystem 12 zur Sicherstellung eines vorgegebenen kinematischen Verhaltens nach dem Träger-Ausstoß über dem Zielgebiet. Das Fallschirmsystem 12 weist zwei Fallschirme auf, von denen zunächst nur ein Bremsschirm 13 aufgespannt wird, nachdem der Gefechtskopf (11) aus seinem Träger - beispielsweise einem Geschoß oder einer Rakete - freigegeben ist (vgl. US-PS 4 753 171). Der zweite, für die endgültige Abstiegsphase ins Zielgebiet ausgelegte, hier sogenannte Abstiegsschirm 14 bleibt zunächst noch in verpacktem Zustand an der Rückseite des Gefechtskopfes 11 gehaltert. Dafür ist am Gefechtskopf 11 über eine lösbare Verbindung 15 eine topfförmige Pack-Kassette 16 befestigt, an deren Rückseite der Bremsschirm 13 über eine Distanzleine 17 befestigt ist. Wenn - beispielsweise gesteuert über einen elektronischen oder pyrotechnischen Zeitgeber - die Verbindung 15 der Kassette 16 zur Rückseite des Gefechtskopfes 11 gelöst wird, wird die Kassette 16 aufgrund der Zugwirkung des Bremsschirmes 13 vom Gefechtskopf 11 abgehoben und dadurch der zunächst noch in einen sackförmigen Packschlauch 18 eingefaltete Abstiegsschirm 14 aus seinem Packraum 19 im vorderen Bereich der Kassette 16 herausgezogen, bis die Fangleinen 20 zwischen dem Abstiegsschirm 15 und dem dazu nun distanzierten Gefechtskopf 11 sich gespannt haben. Dieses ist der Funktionsablauf-Zustand, der in Fig. 1 dargestellt ist.

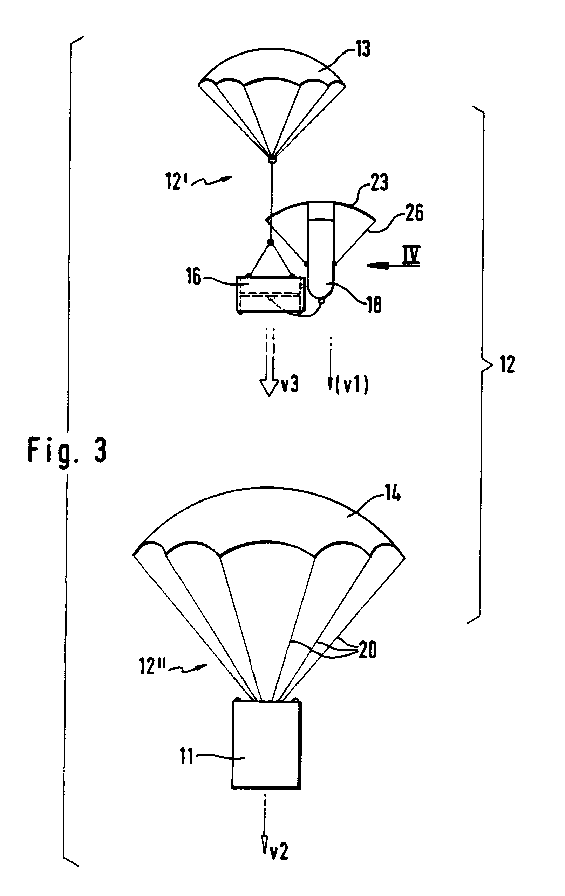

Die Bremswirkung des Schirmes 13 in Bezug auf die Abstiegsbewegung des Gefechtskopfes 11 bewirkt, daß daraufhin der Abstiegsschirm 14 aus seinem Packschlauch 18 herausgezogen und dadurch die obere Hälfte des Fallschirmsystems 12′ (bestehend aus Bremsschirm 13, Distanz-leine 17, nun geleerter Kassette 16 und ebenfalls geleertem Packschlauch 18) vom unteren Teil des Fallschirmsystems 12˝ (umfassend den sich nun entfaltenden Abstiegsschirm 14 samt Fangleinen 20 und Gefechtskopf 11) getrennt ist, sich also im Freiflug davon absetzen kann. Dieser momentane Funktionszustand ist in Fig. 3 dargestellt.

Jedoch besteht die Gefahr, daß aufgrund der Entfaltung des Abstiegsschirmes 14 die Sinkbewegung des Gefechtskopfes 11 derart stark abgebremst wird, daß der noch unmittelbar dahinter absteigende obere Teil 12′ des Fallschirmsystems mit seiner Kassette 16 voraus rückwärts, also von oben, auf den dagegen nun langsamer sinkenden Abstiegsschirm 14 auftrifft und diesen zerstört - zumindest ihn aber in seiner Funktion behindert, was insbesondere dann von Nachteil ist, wenn der Abstiegsschirm als Rotationsschirm für Gewährleistung einer definierten Drehbewegung beim weiteren Abstieg des Gefechtskopfes 11 ausgelegt ist.

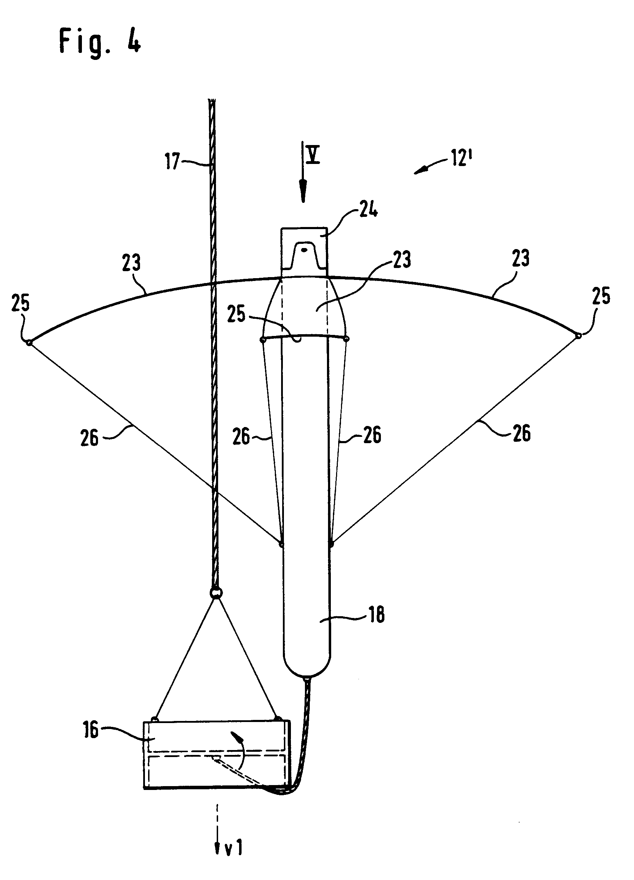

Um dieses zu vermeiden, wird der obere Teil 12′ des Fallschirmsystems nun zusätzlich abgebremst, um den Abstand zum entfalteten Abstiegsschirm 14 des unteren Fallschirmsystem-Teiles 12˝ zu vergrößern. Um dafür aber nicht konstruktiv aufwendige und erheblichen zusätzlichen Stauraum beanspruchende Bremsmittel einsetzen zu müssen, wird die Tatsache ausgenutzt, daß der geleerte Packschlauch 18 aufgrund der Anströmgegebenheiten bei der Sinkbewegung des oberen Systemteiles 12′ nach rückwärts (also nach oben) umschlägt (Fig. 3, Fig. 4). An seiner Außenmantelfläche 21 sind deshalb aerodynamische Bremsmittel 22 angeordnet, die sich erst zur Wirksamkeit entfalten, wenn der vom Abstiegsschirm 14 befreite Packschlauch 18 diese neue Position eingenommen hat. Die Bremsmittel 22 können einfach aus breiten Stoffstreifen 23 bestehen, die im Bereiche der Packschlauch-Öffnung 24 an die Packschlauch-Außenmantelfläche 21 angelegt, etwa einfach angeklebt oder angenäht, sind und deren freie Enden 25 von Fesselleinen 26 gehaltert sind, wenn die freien Ränder 25 infolge der Anströmung bei nach rückwärts umgeschlagenem Packschlauch 18 aus dem Bereiche des geschlossenen Endes der Außenmantelfläche 21 abgehoben werden.

Durch die aufgespannten Stoffstreifen 23 erfährt die Abstiegsbewegung der Kassette 16 eine zusätzliche Verzögerung - unter Verschwenkung aus der ursprünglichen Abstiegslage, wie in Fig. 4 durch den Drehpfeil angedeutet - und dadurch eine Reduktion der ursprünglichen Abstiegsgeschwindigkeit v3 auf eine verminderte Abstiegsgeschwindigkeit v1 die geringer ist, als die Geschwindigkeit v2 des Abstiegsschirmes 14. Dadurch ist gewährleistet, daß die Kassette 16 nicht mehr rückwärts in den aufgespannten Abstiegsschirm 14 einfallen kann, sondern infolge der zusätzlichen aerodynamischen Bremsung und der räumlichen Verschwenkung aus der alten Lage bei verminderter Abstiegsgeschwindigkeit in eine andere Abstiegsbahn umschwenkt, in der keine Kollision mit dem unteren Systemteil 12˝ mehr erfolgen kann.

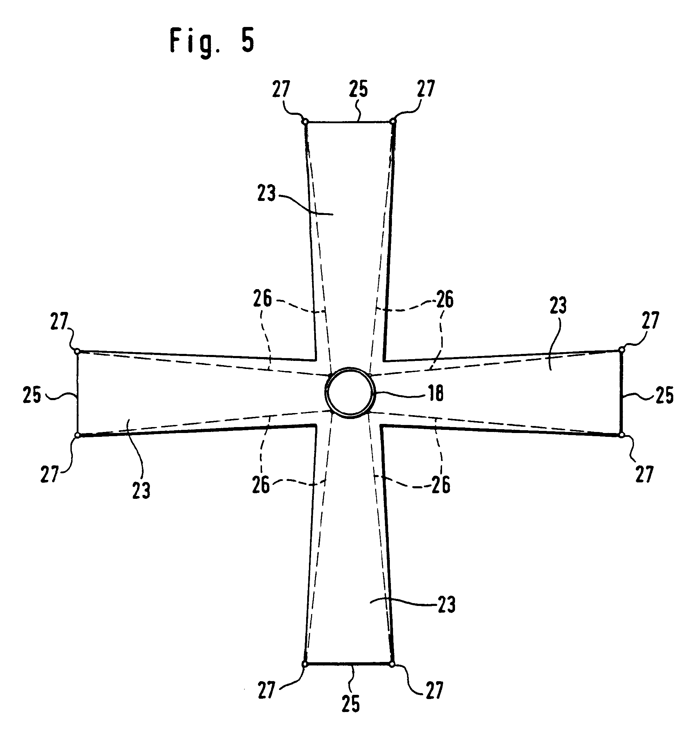

Wie aus den Darstellungen in Fig. 2 und Fig. 5 ersichtlich sind vorzugsweise relativ breite Stoffstreifen 23 vorgesehen, die bei Anlage an der Außenmantelfläche 21 des Packschlauches 18 einander seitlich überlappen können und an deren freien Rändern 25 Befestigungsstellen 27 für jeweils ein Paar von Fesselleinen 26 vorgesehen sind, die bei noch nicht ausgestellten Stoffstreifen 23 V-förmig zwischen diesen und der Packschlauch-Außenmantelfläche 21 eingeschlagen sind, dagegen bei ausgestellten Stoffstreifen 23 in Draufsicht V-förmig zwischen dem Packschlauch 18 und den Befestigungsstellen 27 verlaufen.

## Patentansprüche

1. Zweiteiliges Fallschirmsystem (12; 12′ - 12˝) für einen Abwurfkörper (Gefechtskopf 11) wobei zwischen einem Brennschirm (13) und dem Abwurfkörper ein Absteigsschirm (14) angeordnet und der Abstiegsschirm (14) vom Bremsschirm (13) durch Abziehen eines Packschlauches (18) für den Abstiegsschirm (14) lösbar ist, damit der Abstiegsschirm (14) sich entfalten kann,
dadurch gekennzeichnet,
daß zwischen dem Bremsschirm (13) und dem Packschlauch (18) eine Pack-Kassette (16) angeordnet und der daran befestige Packschlauch (18) mit aerodynamischen Bremsmitteln (22) ausgestattet ist, die wirksam sind, wenn der vom Abstiegsschirm (14) abgezogene Packschlauch (18) beim getrennten Fallschirmsystem (12′ - 12˝) in Richtung auf den Bremsschirm (13) zurückgeschlagen hat.

2. Fallschirmsystem nach Anspruch 1,
dadurch gekennzeichnet,
daß streifenförmige Bremsmittel (22) vorgesehen sind, die im Bereiche der Packschlauch-Öffnung (24) an die Packschlauch-Außenmantelfläche (21) angelenkt und mit ihren freien Rändern (25) über Leinen (26) an den geschlossenen Bereich des Packschlauches (18) gefesselt sind.

3. Fallschirmsystem nach Anspruch 2,
dadurch gekennzeichnet,
daß die Bremsmittel (22) als Stoffstreifen (23) ausgebildet sind, die an den Ecken ihrer freien Ränder (25) mit Befestigungsstellen (27) für jeweils ein Paar von Fesselleinen (26) ausgestattet sind.

4. Fallschirmsystem nach Anspruch 2 oder 3,
dadurch gekennzeichnet,
daß die Bremsmittel-Streifen (23) einander in an die Packschlauch-Außenmantelfläche (21) angelegter Stellung seitlich überlappen.

## Claims

1. A two-part parachute system (12; 12′ - 12˝) for a jettisonable body (warhead 11), a descent parachute (14) being arranged between a braking parachute (13) and the jettisonable body and the descent parachute (14) being detachable from the braking parachute (13) by pulling-off of a packing tube (18) for the descent parachute (14), so that the descent parachute (14) can unfold, characterised in that arranged between the braking parachute (13) and the packing tube (18) is a packing cassette (16) and the packing tube (18) fastened thereto is equipped with aerodynamic braking means (22) which are effective when the packing tube (18), drawn-off from the descent parachute (14) with the parachute system (12′ - 12˝) separated, has swung back in the direction of the braking parachute (13).

2. A parachute system according to claim 1,
characterised in that strip-shaped braking means (22) are provided, which are hinged in the region of the packing-tube aperture (24) to the packing-tube outer jacket surface (21) and are fettered by their free edges (25) by way of lines (26) onto the closed region of the packing-tube (18).

3. A parachute system according to claim 2,
characterised in that the braking means (22) are designed as fabric strips (23), which are equipped at the corners of their free edges (25) with fastening points (27) for respectively a pair of fetter lines (26).

4. A parachute system according to claim 2 or 3, characterised in that the braking-means strips (23) laterally overlap one another in the position applied to the packing-tube outer jacket surface (21).

## Revendications

1. Système de parachutes en deux parties (12; 12′- 12˝) destiné à un corps largable (tête militaire 11), dans lequel un parachute de descente (14) est disposé entre un parachute de freinage (13) et le corps largable, et le parachute de descente (14) peut être détaché du parachute de freinage (13) en étant retiré d'un boyau d'empaquetage (18) lui est destiné de manière que ce parachute de descente (14) puisse se déployer,
caractérisé en ce que
entre le parachute de freinage (13) et le boyau d'empaquetage (18) est placée une cassette d'empaquetage (16), et le boyau d'empaquetage (18) qui lui est rattaché est équipé de moyens de freinage aérodynamiques (22) qui deviennent actifs quand le boyau d'empaquetage (18) dont a été retiré le parachute de descente (14) s'est retourné en direction du parachute de freinage (13) quand le système de parachutes (12′- 12˝) est séparé.

2. Système de parachutes selon la revendication 1,
caractérisé en ce que
sont prévus des moyens de freinage (22) en forme de bandes qui sont raccordées à la surface d'enveloppe (21) du boyau d'empaquetage dans la région de l'ouverture (24) de ce boyau et sont reliées par leurs bords libres (25) et par l'intermédiaire de lignes (26) à la partie fermée du boyau d'empaquetage (18).

3. Système de parachutes selon la revendication 3,
caractérisé en ce que
les moyens de freinage (22) sont constitués sous forme de bandes de tissu (23) qui sont équipées de positions de fixation (27) pour des paires respectives de lignes de liaison (26) aux coins de leurs bords libres (25).

4. Système de parachutes selon la revendication 2 ou 3,
caractérisé en ce que
les bandes (23) constituant les moyens de freinage se chevauchent latéralement dans leur position appliquée sur la surface d'enveloppe extérieure (21) du boyau d'empaquetage.
